# EUROPEAN PATENT APPLICATION

(11) **EP 1 857 303 A2**
(43) Date of publication of application: **21.11.2007**
(21) Application number: 07000707.5
(22) Date of filing: 15.01.2007
(51) Int. Cl.: B60C 23/06

(54) **Tire defect sensing apparatus using piezo sensor and method of the same**

(30) Priority: 15.05.2006 KR 20060043213
(71) Applicant: Lim, Ho-Jook, Sang-myeon Gapyeong-gun Gyeonggi-Do 477-822 (KR)
(72) Inventor: Lim, Ho-Jook, Sang-myeon Gapyeong-gun Gyeonggi-Do 477-822 (KR)
(74) Representative: TER MEER - STEINMEISTER & PARTNER GbR

(57) **Abstract**

Disclosed is a tire defect sensing apparatus using a piezo sensor that continually senses tire vibration when a vehicle travels at high speed to make it possible to inform a user of a puncture in a tire as soon as possible. The tire defect sensing apparatus comprises: piezo sensor units 20 each attached to any one portion of suspension units 10 disposed on a front wheel and a rear wheel of a vehicle, respectively, to make it possible to obtain electrical signals in response to vibration; a vehicle electronic control unit 30 receiving the detected information from each of the piezo sensor units 20 to compare and judge the detected information; and an alarm means 40 connected to the vehicle electronic control unit 30 to inform a driver of the information therefrom.

## Description

### BACKGROUND OF THE INVENTION

### 1. Field of the Invention

The present invention relates to a tire defect sensing apparatus using a piezo sensor and a method of the same, and more particularly, to a tire defect sensing apparatus using a piezo sensor and a method of the same capable of sensing an abnormal state of a tire and informing a driver thereof, when different waveforms are sensed by frequently checking a vibration state of a tire at the time of traveling at high speed by a piezo sensor.

### 2. Description of the Related Art

In general, a vehicle has at least four wheels that are positioned at front left and right and rear left and right of the vehicle. Generally, the wheel is constituted by a tire, a rim on which the tire is mounted, and nave or wheel disc for joining the rim to the wheel hub. A main purpose of the wheel with a tire is to share a part of the entire weight of a vehicle and to support the vehicle, and to withstand torque generated when driving and braking the vehicle, impact from the road surface, centrifugal force generated when the vehicle turns, and the weight of the vehicle when the vehicle leans to one side. And, a main purpose of the tire is to absorb the impact from the road surface while the vehicle travels and to reduce the slippage of the vehicle on the road surface when the vehicle brakes, drives, and turns, wherein the tire is fixed onto the rim of the wheel so that they is integrally rotated.

However, the conventional wheel for the vehicle can not sufficiently perform the forgoing functions when the air pressure of the tire is lowered slowly or rapidly so that the air pressure of the tire must be supplemented. In particular, when the air pressure of the tire is rapidly lowered due to unexpected accident, such as a puncture in the tire, the forgoing functions as well as even the most basic functions can not be performed so that the vehicle can not be used until the tire is repaired or exchanged.

In particular, the reduction in the air pressure of the tire while the vehicle travels at high speed leads to the breakage of the tire so that stability of traveling is seriously damaged, making it possible to cause a large accident.

Recently, of course, tires referred to as a safe tire have been developed, which can prevent air from being leaked with respect to a simple external wound and make emergency travel possible, even though the tire is punctured. However, all of these safe tires are only associated with a tire structure to reduce leakage of air by putting a special reinforcing rubber in the inside of the tire. Such a method is only a passive countermeasure.

Recently, an apparatus for continuously sensing tire pressure and informing a driver of a symptom of a puncture in the tire by attaching a sensor to the wheel of the tire has also been developed. However, there are problems in that the apparatus is hard to manufacture and its manufacturing cost is very expensive due to its complicated structure.

### SUMMARY OF THE INVENTION

Accordingly, the present invention is proposed to solve the problems in a prior art as described above. It is an object of the present invention to provide a tire defect sensing apparatus and sensing method using an inexpensive piezo sensor and method of the same, which can continuously sense tire vibration when a vehicle travels at high speed and inform a driver of the reduction in the air pressure of a tire, a puncture in a tire, a symptom of a puncture in a tire as soon as possible.

In order to accomplish the objects, there is provided a tire defect sensing apparatus using a piezo sensor of the present invention for use in a vehicle having a left front wheel and a right front wheel and a left rear wheel and a right rear wheel, comprising: piezo sensor units each attached to any one portion of suspension units disposed on the front wheels and the rear wheels of the vehicle, respectively, to make it possible to obtain electrical signals in response to vibration; a vehicle electronic control unit receiving the detected information from each of the piezo sensor units to compare and judge the detected information; and an alarm means connected to the vehicle electronic control unit to inform a driver of the information therefrom.

Preferably, the piezo sensor unit is provided in a damping unit of the suspension units.

Preferably, the piezo sensor unit may be provided in a suspension arm of the suspension units.

And, in order to accomplish the objects, there is provided a tire defect sensing method using a piezo sensor of the present invention comprising the steps of: when a rear wheel follows up the progressing position of a front wheel by comprising piezo sensor units each attached to suspension units disposed on a left front wheel and a right front wheel and a left rear wheel and a right rear wheel, respectively, to make it possible to obtain electrical signals in response to vibration, detecting the vibration of the front wheel when the front wheel passes by any position A by a piezo sensor unit for sensing the vibration of the front wheel; detecting the vibration of the rear wheel when the rear wheel passes any position A by the piezo sensor unit for sensing the vibration of the rear wheel; calculating the detected vibration of the front wheel and the detected vibration of the rear wheel so as to compare and judge therebetween in an electronic control unit; and informing a driver that the compared and judged calculation value of the detected vibration of the front wheel does not conform to the compared and judged calculation value of the detected vibration of the rear wheel, by an alarm means.

### BRIEF DESCRIPTION OF THE DRAWINGS

Other objects and aspects of the present invention will become apparent from the following description of embodiments with reference to the accompanying drawings in which:
FIG. 1 is a schematic view for explaining an installation example of a tire defect sensing apparatus according to the present invention;

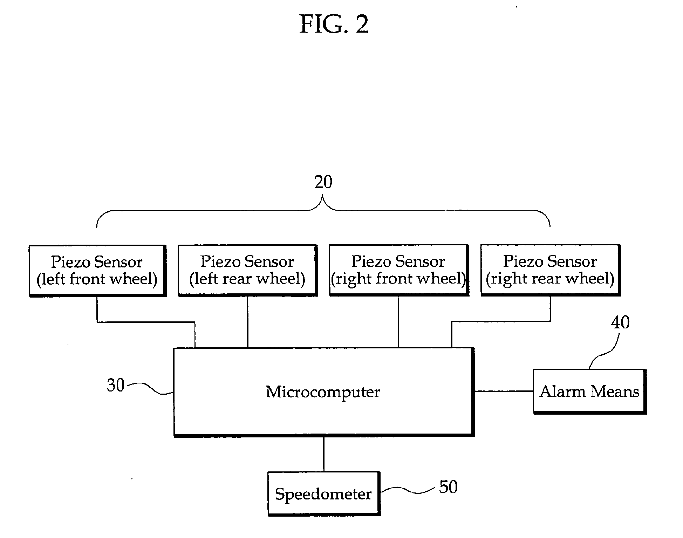

FIG. 2 is a block diagram showing a constitution of the tire defect sensing apparatus according to the present invention;
FIG. 3 is a perspective view of a wheel suspending apparatus showing an installation state of the tire defect sensing apparatus according to the present invention; and
FIG. 4 is a flow chart for explaining a tire defect sensing method of the present invention;

### DETAILED DESCRIPTION OF THE INVENTION

Hereinafter, a constitution and an effect of the present invention will be described with reference to accompanying drawings.

First, a tire defect sensing apparatus using a piezo sensor of the present invention will be described.

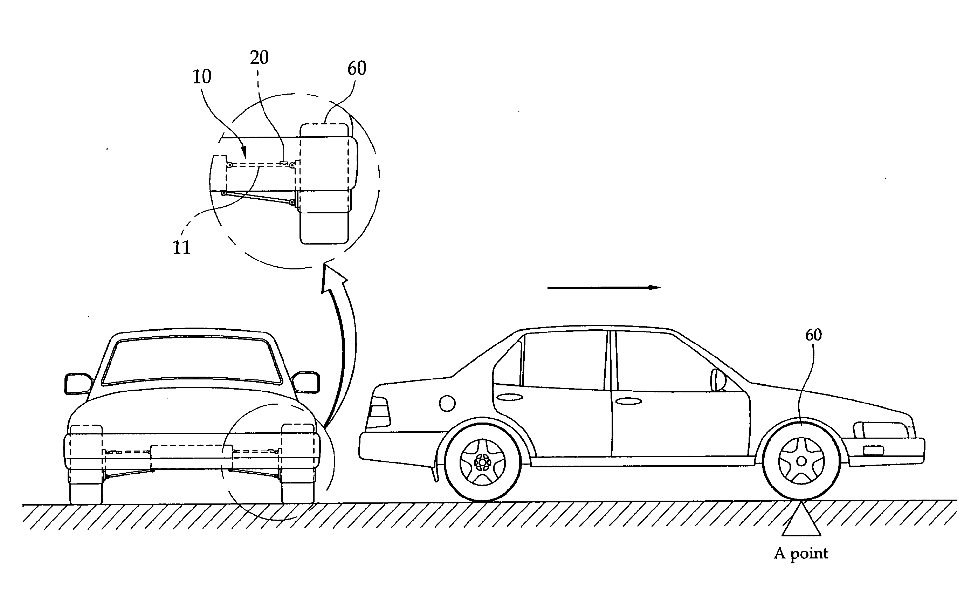

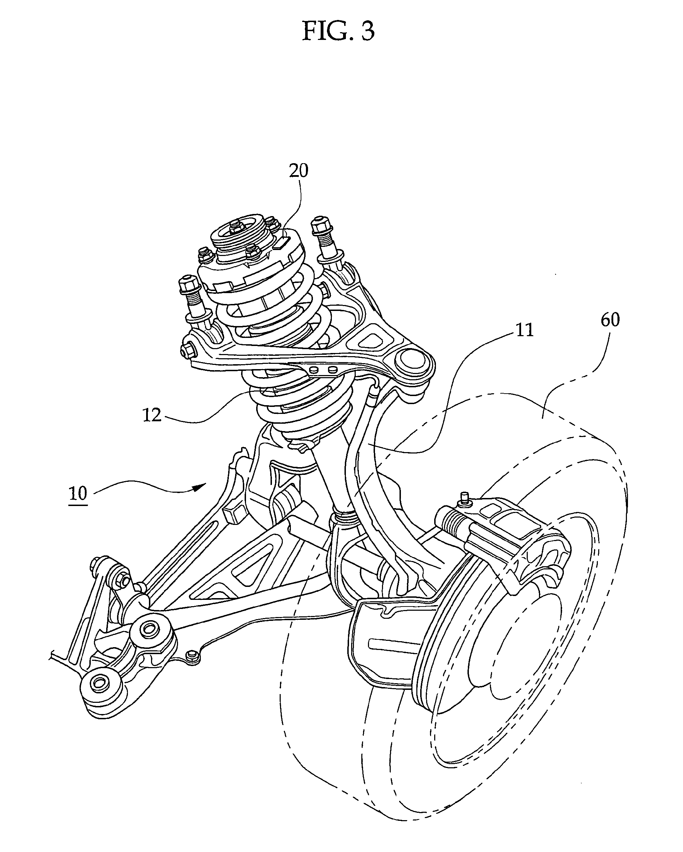

FIG. 1 is a schematic view for explaining an installation example of a tire defect sensing apparatus according to the present invention, and FIG. 3 is a perspective view of a wheel suspension apparatus showing an installation state of the tire defect sensing apparatus according to the present invention.

In the present invention, a vehicle having a left front wheel and a right front wheel and a left front wheel and a right rear wheel will be described.

And, each of the piezo sensor units 20 is attached to any one portion of suspension units 10 disposed on the front wheels and the rear wheels of the vehicle, respectively, to make it possible to obtain electrical signals in response to vibration.

Further, the tire defect sensing apparatus using the piezo sensor comprises a vehicle electronic control unit (ECU) 30 receiving the detected information from each of the piezo sensor units 20 to compare and judge the detected information and an alarm means 40 connected to the vehicle electronic control unit 30 to inform a driver of calculation information when necessary.

The piezo sensor unit 20 is most preferably attached to the suspension units 10 near the tier. However, the piezo sensor unit 20 may be attached to a suspension arm 11 as shown in FIG. 1 and to a damping unit 12 as shown in FIG. 3.

Although not described in the drawings, 50 is an existing used speedometer and 60 is a tire.

For reference, the piezo sensor unit 20 comprises a piezo sensor using a piezo effect, and can be considered as a completed component comprising a sensor and a metal case for protecting the sensor.

The piezo effect refers to the phenomenon that if an element is subject to force, it is transformed to generate voltage and to the contrary, if the element is applied with voltage, it is moved or generates force, as is generally known. In other words, it indicates a mutual conversion effect of a mechanical effect and an electrical effect and is referred to as a piezoelectric effect. And, as elements generating the piezoelectric effect, there may be a variety of elements, such as crystal, tourmaline, ceramic, barium titanic acid, and the like. These elements are produced to be transacted as a single part.

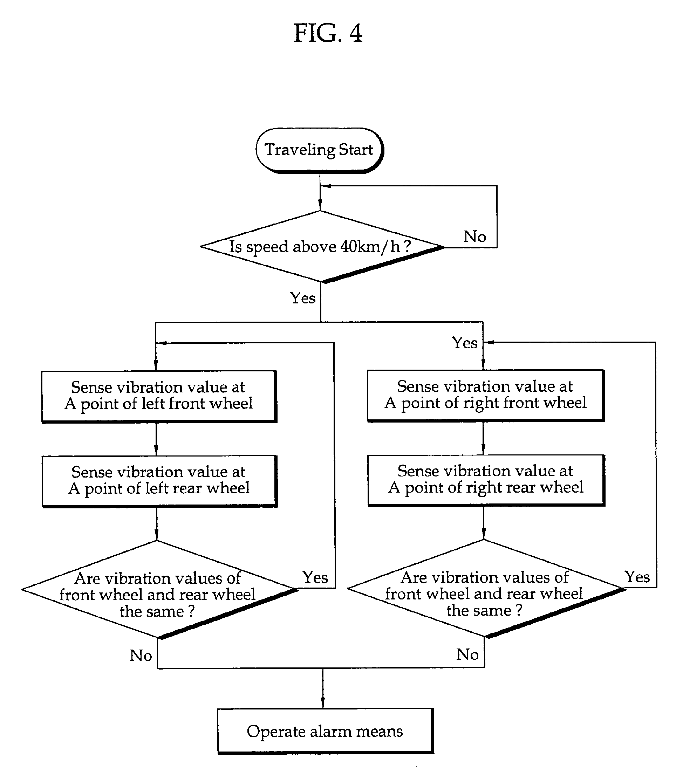

Meanwhile, an operation according to the present invention constituted as above is as shown in FIG. 4.

Each of piezo sensor units is attached to suspension units 10 disposed on a left front wheel and a right front wheel and a left rear wheel and a right rear wheel of a vehicle, respectively, to make it possible to obtain electrical signals in response to vibration transferred from each of the wheels. In general, when the vehicle travels at any speed, the rear wheel always follows up the front wheel.

As shown in FIG. 4, when the vehicle travels at any speed, it first grasps a traveling speed value and then judges whether or not the piezo sensor units should be operated.

In other words, when the left front wheel passes any position A of FIG. 1, the vibration of the left front wheel is sensed by the piezo sensor unit 20 for sensing the vibration of the left front wheel and then immediately, the vibration of the left rear wheel is sensed by the piezo sensor unit 20 for sensing the vibration of the left rear wheel.

Further, when the right front wheel passes any position A, the vibration of the right front wheel is sensed by the piezo sensor unit 20 for sensing the vibration of the right front wheel and then immediately, the vibration of the right rear wheel is sensed by the piezo sensor unit 20 for sensing the vibration of the right rear wheel.

Each vibration value sensed as above is transferred to the electronic control unit 30 of the vehicle. The electronic control unit 30 compares and judges the vibration values at the same position. As a result, when the vibration values are in the range of the same value, the electronic control unit 30 does not issue an alarm and when the calculation value of any one of the left and the right vibration values is out of the range of the same value, the electronic control unit 30 informs a driver of it through the alarm means 40.

Accordingly, the driver previously receives information on the different air pressure of the tires of the front and rear wheels and further receives the abnormal symptoms of the tire, such as a puncture in a tire or a breakage of a tire caused due to the different air pressure and the like so that he or she can take safe measures.

As described above, according to the present invention, since tire vibration is frequently sensed in response to a traveling of a vehicle using a piezo sensor unit, a driver more rapidly recognizes abnormal due to the change in the air pressure of a tire while the vehicle travels at high speed, making it possible to previously prevent safety accident and since a structure of an apparatus for sensing the tire vibration is simple, the apparatus can easily be attached to a vehicle so that it is convenient to use.

Although the present invention has been described in detail reference to its presently preferred embodiment, it will be understood by those skilled in the art that various modifications and equivalents can be made without departing from the spirit and scope of the present invention, as set forth in the appended claims.

## Claims

1. A tire defect sensing apparatus using a piezo sensor for use in a vehicle having a left front wheel and a right front wheel and a left rear wheel and a right rear wheel, comprising:
piezo sensor units 20 each attached to any one portion of suspension units 10 disposed on the front wheels and the rear wheels of the vehicle, respectively, to make it possible to obtain electrical signals in response to vibration;
a vehicle electronic control unit 30 receiving the detected information from each of the piezo sensor units 20 to compare and judge the detected information; and
an alarm means 40 connected to the vehicle electronic control unit 30 to inform a driver of the information therefrom.

2. The tire defect sensing apparatus as claimed in claim 1, wherein the piezo sensor unit 20 is provided in a damping unit 10 of the suspension units.

3. The tire defect sensing apparatus as claimed in claim 1, wherein the piezo sensor unit 20 may be provided in a suspension arm 11 of the suspension units 10.

4. A tire defect sensing method using a piezo sensor comprising the steps of: when a rear wheel follows up the progressing position of a front wheel by comprising piezo sensor units 20 each attached to suspension units 10 disposed on a left front wheel and a right front wheel and a left rear wheel and a right rear wheel, respectively, to make it possible to obtain electrical signals in response to vibration,
detecting the vibration of the front wheel when the front wheel passes by any position A by a piezo sensor unit 20 for sensing the vibration of the front wheel;
detecting the vibration of the rear wheel when the rear wheel passes any position A by the piezo sensor unit 20 for sensing the vibration of the rear wheel;
calculating the detected vibration of the front wheel and the detected vibration of the rear wheel so as to compare and judge therebetween in an electronic control unit; and
informing a driver that the compared and judged calculation value of the detected vibration of the front wheel does not conform to the compared and judged calculation value of the detected vibration of the rear wheel, by an alarm means 40.
